Europäisches Patentamt

European Patent Office

Office européen des brevets

(11) Publication number: **0 513 467 A1**

## EUROPEAN PATENT APPLICATION

(21) Application number: **91830204.3**

(22) Date of filing: **16.05.91**

(51) Int. Cl.5: **B60P 1/64**

(43) Date of publication of application:
**19.11.92 Bulletin 92/47**

(84) Designated Contracting States:
**AT BE CH DE DK ES FR GB GR IT LI LU NL SE**

(71) Applicant: **CASTAGNOLI DANTE & FIGLI snc**
**Via Calcinaro 2605**
**I-47023 Cesena (Forli)(IT)**

(72) Inventor: **Dante, Castagnoli**
**via Madonna delle Rose 17**
**I-47023 Cesena (Forli)(IT)**

(74) Representative: **Sassatelli, Franco T., Dr.**
**c/o INIP via Ruggi 5**
**I-40137 Bologna(IT)**

(54) Freezing cell for animal mortal remains and for slaughter swerves.

(57) The invention foresees a freezing cell (1), for animal mortal remains and slaugter swerves disposal, solidarily brought on a frame (2) with rear capstans couple (3) and with a front stabilizing structure (4) with upper catching part (5) for its loading, by means of an hydraulic drive mechanical stick (6), on loading flatcar (7) of a lorry (8). When the cell (1) arrives at the lay-by (9) fixed on the ground for its locating, the cell (1) itself is discharged by means of the mechanical stick (6) and as filling it is reloaded on the lorry used to bring the same cell in the product disposal place where the contents is discharged, with gravitational effect, lifted the cell (1) with the mechanical stick (6) afther having stopped the refrigerator group (11) so to detach the frozen goods from the cell (1) wall.

FIG.2

The invention refers to a freezing cell, discharged on the ground from the lorry loading flatcar, for animal mortal remains and slaugter swerves which, periodically brought in the animal husbandry or abattoir loading place from the concern operates the disposal, is then withdrawn by the same concern on the base of times connected with the work cycle. The invented device is particularly used in the avicultural, pig-breeding, ovines and also in the slaughter-houses. It is known that in these places must be foreseen the working swerves disposal and in particular in the farms these are ciclicly previously quantified also considering a certain mortality rate. Actually for their disposal, these swerves are buried, burnt or periodically withdrawn by concerns specialized in this service. This last disposal system is praticable by using a freezing cell put on a fixed lay-by into the farm or other place. Preliminarily this causes the big disadvantage to must employ workers, with suitable protection means like masks and contagion immune overalls, for freezing cell emptying and for its content loading on the lorry of the concern responsible for the disposal. This creates also an environment pollution owing to the putrefaction parts presence and in each case owing to the smells which are generated. Moreover in this actual proceeding, the refrigerator device no-working of the permanent cell determines the swallowed product putrefaction so to create big problems to withdraw the same and with big environment pollution.

The invented device avoids these disadvantages by using a freezing cell, unloading on the ground from the lorry loading flatcar, which principally permits a periodical withdrawal of the animal slaugter swerves which are daily produced and, also of the animal mortal remains, so it is possible for the farm workers to put into it both the animal mortal remains that the farm or slaugter swerves. Substantially the invented device foresees a resin freezing cell 1 solidarily brought on frame 2 with rear capstans couple 3 and with a front stabilizing structure 4 with upper catching part 5 of the hydraulic drive mechanical stick 6 acting from the loading flatcar 7 of the lorry 8. From the drive cab, the driver commands the unloading on ground of the freezing cell 1 from the loading flatcar 7 to the leveled standing lay-by 9 in reinforced concrete, with the position reaching of the cell permits by creep on the capstans couple 3.Then the mechanical stick 6 is disengaged from the catching part 5 so to permit the staying of the freezing cell 1 on the lay-by 9 whereas the lorry 8 can be employed in different way by the disposal concern. For the loading of the disposal product, it is opened the doors 10 of the cell, determining the automatic stop of the refrigerator group 11 operation. When the doors 10 are closed it is foreseen automatically the running again of the refrigerator group 11 so to avoid, inadvertently, the no-starting of the refrigerator group itself which would cause the product putrefaction into the cell. When the operative cycle is ended the concern, responsible for the disposal, arranges for the freezing cell 1 recovery from the lay-by 9 by means of a lorry supplied with suitable tools so to permit to send the disposal product on the dump point. When the lorry arrives by the storage or user concern, before unloading it is provides in the first place to stop the refrigerator group operation so to determine, after some time, the frozen product mass separation from the freezing cell 1 walls.Then the cell is brought in oblique by means of the mechanical stick 6 so to unload, by gravitation effect, the disposal product. Substantially the invented process permits to limit the manual intervention during the loading of the freezing cell so to greatly permit the working costs reduction whereas, permitting the working on frozen product, it avoids the environment pollution and also eventual problems for workers.

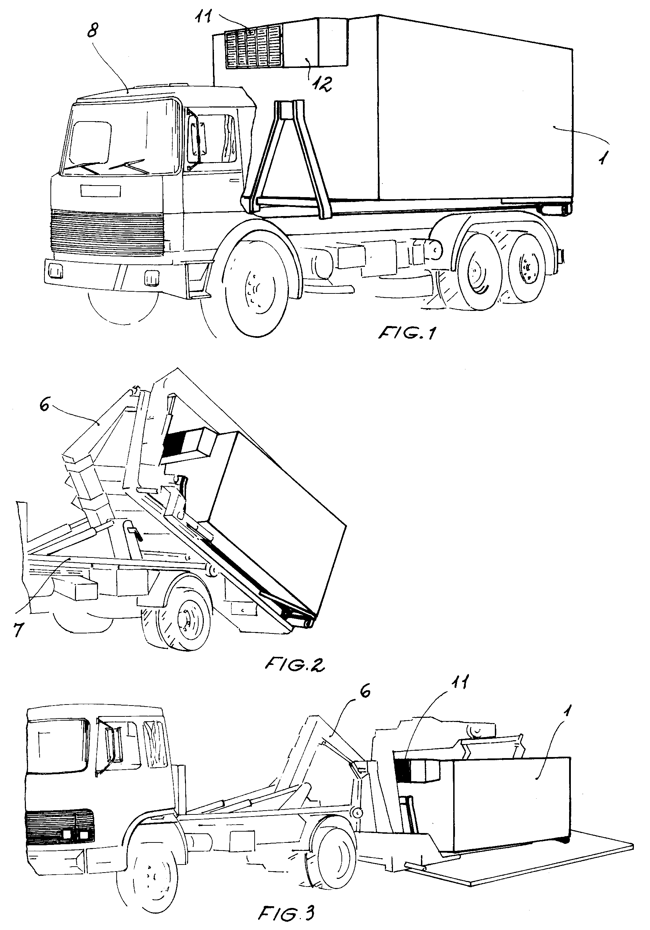

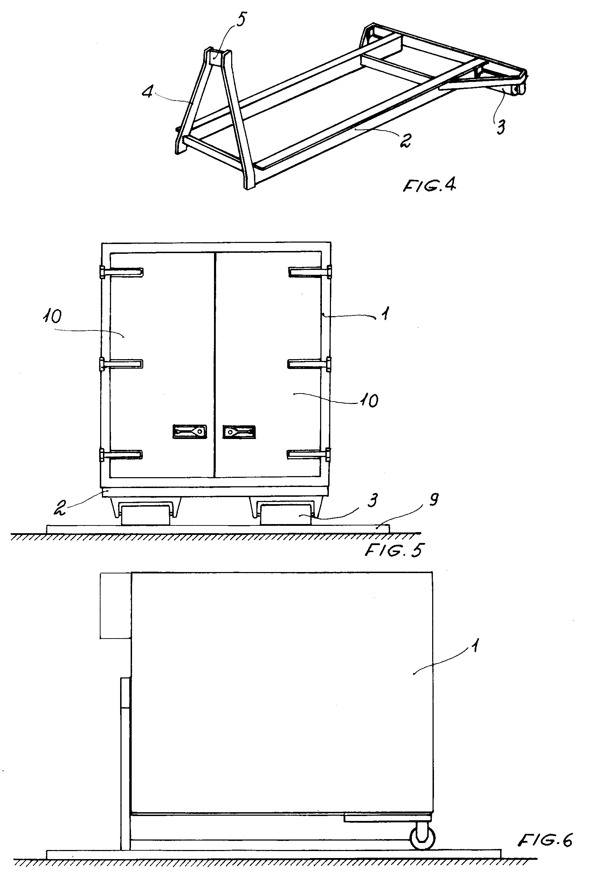

An exectuion form of the system is showing in indicative way in the drawings of tables 1 and 2. Referring to table 1, fig. 1 is view of a lorry which brings on its loading flatcar the freezing cell. The fig. 2 is view of the mechanical stick which is loading the freezing cell. The fig. 3 shows the freezing cell already reachs on the standing lay-by. In table 2 fig. 4 is perspective view of the frame 2 which supports integral the freezing cell 1. Fig. 5 is lying view of the freezing cell brings on truck 2 standing on the lay-by 9. Fig. 6 is side view of the same assembly of fig. 5.

In realization version is foreseen a refrigerator adequate for the freezing in twentyfour hours of a disposal product quantity variable from 6 (six) to 8 (eight) quintals because the mortal remains withdrawal is actuated one or two times in a day.

To indicate the no-operation of the refrigerator group 11 is foreseen a bright indicator and/or alarm siren 12 so to permit that the consumer can call the concern entrusted of the service.

In the realization the proceedings can be actuated with different self-moving means acting the ground stationing and the collecting of the freezing cell 1.

**Claims**

1. Freezing cell for animal mortal remains and for slaugter swerves, characterized by the fact that said resin freezing cell (1) is solidarily brought on a frame (2) with rear capstans couple (3) and with a front stabilizing structure (4) with upper catching part (5) of the hydraulic drive mechanical stick (6) acting from the loading flatcar (7) of the lorry (8). From the drive cab, the driver commands the unloading on ground of the freezing cell (1) from the loading flatcar (7) to the leveled standing lay-by (9) in reinforced concrete, with the position reaching of the cell permits by creep on the capstans couple (3). Then the mechanical stick (6) is disengaged from the catching part (5) so to permit the staying of the freezing cell (1) on the lay-by (9) whereas the lorry (8) can be employed in different way by the disposal concern.

2. Freezing cell for animal mortal remains and for slaugter swerves, as in claim 1), characterized by the fact that for the loading of the disposal product, it is opened the doors (10) of the cell determining the automatic stop of the refrigerator group (11) operation. When the doors (10) are closed it is foreseen automatically the running again of the refrigerator group (11) so to avoid, inadvertently, the no-starting of the refrigerator group itself which would cause the product putrefaction into the cell.

3. Freezing cell for animal mortal remains and for slaugter swerves, as in claim 1), characterized by the fact that when the cell is full the concern, responsible for the disposal, arranges for the freezing cell (1) recovery from the lay-by (9) by means of a lorry supplied with suitable tools so to permit to send the disposal product on tee dump point. When the lorry arrives by the storage or disposal point, before unloading it is provided in the first place to stop the refrigerator group (11) operation so to determine, after some time, the frozen product mass separation form the freezing cell (1) walls. The the cell is brough in oblique by means of the mechanical stick (6) so to unload, by gravitation effect, the disposal product.

4. Freezing cell for animal mortal remains and for slaugter swerves, as in claim 1), characterized by the fact that to indicate the no-operation of the refrigerator group (11) is foreseen a bright indicator and/or an alarm siren (12) so to permit that the user can call the concern entrusted of the service.

FIG.1

FIG.2

FIG.3

4

FIG.4

FIG.5

FIG.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-A-3 904 277 (KUSSMAUL)<br>* the whole document *<br>--- | 1 | B60P1/64 |
| A | DE-A-3 143 955 (SCHULTE)<br>* page 6, line 34 - page 11, line 37; figures *<br>--- | 1 | |
| A | GB-A-2 112 756 (T.T. BOUGHTON AND SONS)<br>* page 2, line 46 - line 96 *<br><br>----- | 1 | |

TECHNICAL FIELDS
SEARCHED (Int. Cl.5 )

B60P
B65D
F16M

The present search report has been drawn up for all claims

| Place of search | Date of completion of the search | Examiner |
|---|---|---|
| THE HAGUE | 15 JANUARY 1992 | VANNESTE M.A.R. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)